# EUROPEAN PATENT SPECIFICATION

(11) **EP 0 463 865 B1**
(45) Date of publication and mention of the grant of the patent: **06.03.1996**
(21) Application number: 91305754.3
(22) Date of filing: 25.06.1991
(51) Int. Cl.: B60S 1/38

(54) **Stiffening structure for a windscreen wiper blade**
Versteifung für ein Windschutzscheiben-Wischblatt
Raidisseur pour une lame d'essuie-glace sur un pare-brise

(30) Priority: 26.06.1990 GB 9014179
(43) Date of publication of application: 02.01.1992
(73) Proprietor: TRICO LIMITED, Gwent NP4 0XZ, Wales (GB)
(72) Inventor: Mower, Peter, Twickenham, Middlesex (GB)
(74) Representative: James, Michael John Gwynne

(56) References cited:
- EP-A- 0 279 640
- EP-A- 0 314 033
- DE-A- 3 208 749
- US-A- 4 279 054
- US-A- 4 336 625

## Description

This invention relates to a vertebra for a windscreen wiper blade.

Today, the majority of windscreen wipers have a blade construction comprising a so called "blade rubber" which may be formed from rubber or another elastomeric material and a harness including a main yoke and at least two subsidiary yokes pivotally connected to the ends of the main yoke. These subsidiary yokes carry claws where they are in contact with the blade rubber, the claws engaging in slots or recesses in the blade rubber so as to hold the blade rubber and also to transmit to the blade rubber a force which is generated by a spring device associated with an arm which carries and drives the blade.

In order to cope with the conditions necessary to effect a good wipe of the windscreen, particularly where the windscreen has a variable curvature, it is necessary for the blade rubber to be relatively flexible about a longitudinal plane at right angles to the windscreen to enable the blade to lean over to one side or the other during reciprocating movement of the blade while, at the same time, it must be maintained relatively inflexible transversely parallel to the windscreen so as to maintain the blade rubber in a substantially straight line. Furthermore flexibility must be achieved in a direction towards and away from the windscreen to allow the blade rubber to follow the contour of the screen.

To this end, the blade rubber is usually provided with a stiffener in the form of a vertebra which allows movement to and from the windscreen while preventing flexibility at right angles thereto. One such vertebra is the so called "twin rail" vertebra in which a pair of rails formed of generally planar strips are located in longitudinal grooves on opposite sides of the blade rubber with their minimum dimension at right angles to the windscreen. One example of such an arrangement is shown in EP-A-0314033.

With the advent of high vehicle speeds, the pressure distribution on the blade rubber can become critical for an effective wipe with high airflow velocities and in order to achieve the desired pressure distribution as transmitted to the windscreen, variation in flexibility of the blade rubber perpendicularly to the screen is required. Furthermore, where the curvature of the windscreen is particularly large, certain parts of the blade rubber require different flexibilities to permit the rubber to follow the contour of the windscreen while, at the same time, enabling the wipe characteristics of the blade to be maintained. To this end a number of proposals have been made for achieving this variation in flexibility with varying success.

The present invention seeks to provide for a variation of the flexibility and/or pressure distribution of a windscreen wiper blade along its length in an effective and simple manner.

According to the invention, a vertebra for stiffening the blade rubber of a windscreen wiper comprises a pair of rails located longitudinally in side grooves in the blade rubber, characterised in that the section of the rails varies from planar at points of maximum flexibility to a non-planar section at points of minimem flexibility.

Preferably the cross-section of the rails at their non-planar cross-section is of "V" shape, the narrow point of the "V" pointing either towards or away from the windscreen.

The non-planar cross-section may be provided as individual short lengths at specific points along the blade rubber or may be provided to encompass relatively long lengths of the blade rubber. The variation of the cross-section of the vertebra may be carried out by any suitable means such as pressing or rolling.

In one specific embodiment, the rail may have a non planar part extending from one end of the blade rubber to a position beyond the central part thereof, only a region adjacent to the other end being of planar section. In an alternative embodiment, the rail may have both ends planar with only the central portion non-planar.

The invention will now be described in greater detail, by way of example, with reference to the drawings, in which:-
Figure 1 is a side view of a windscreen wiper blade to which a vertebra in accordance with the invention can be applied;
Figure 2 is a sectional view of the blade rubber, with the harness removed for clarity, showing the cross-section of the vertebra rails taken on the line II - II of figure 1;
Figure 3 is a sectional view of the blade rubber similar to figure 2 but taken on the line III - III of figure 1;
Figure 4 is perspective view of a rail forming one half of a vertebra in accordance with the invention;
Figure 5 is a partial side view of the windscreen wiper blade of the type shown in figure 1 showing pressure distribution with a known vertebra construction, and
Figure 6 is a partial side view similar to figure 5 but showing the pressure distribution with a vertebra construction in accordance with the present invention.

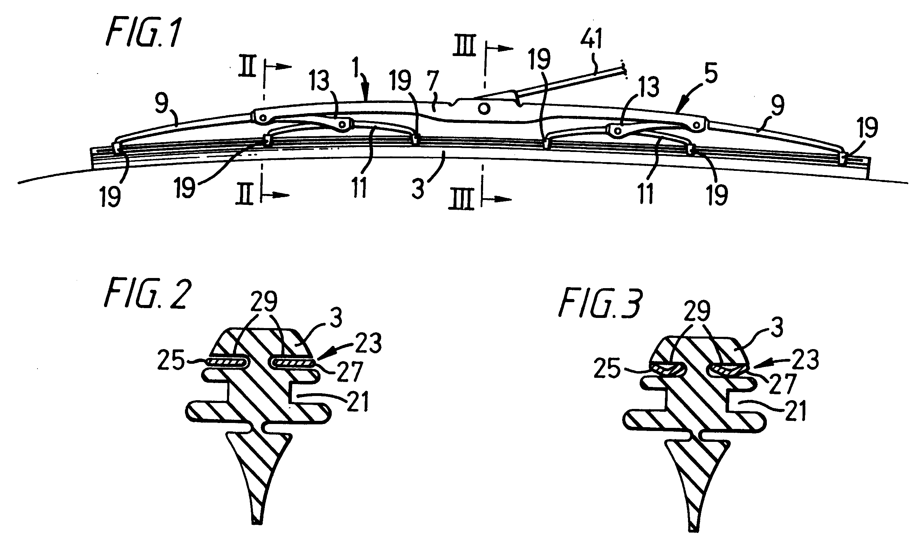

Referring firstly to figures 1 to 3, there is shown a windscreen wiper blade 1 comprising a blade rubber 3 carried by a harness 5. This harness 5 comprises a main yoke 7 carrying a secondary yoke 9 at each end. Each secondary yoke 9 carries a tertiary yoke 11 at its inboard ends 13. Both ends 15 of the tertiary yokes 11 and the outboard ends 17 of the secondary yokes 9 are provided with claws 19 which are arranged to engage slots or recesses 21 in the blade rubber 3 to retain the blade rubber 3 on the harness.

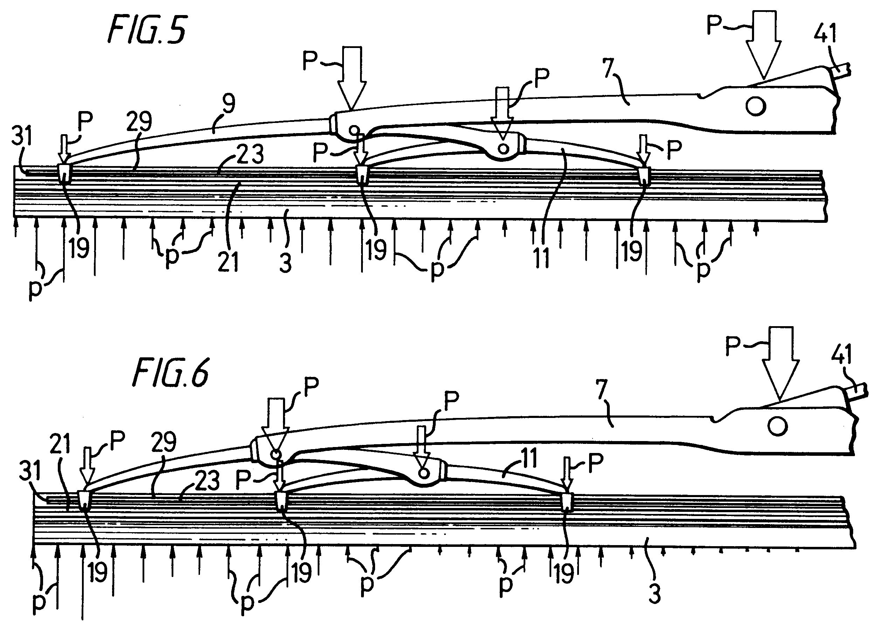

The blade rubber 3 shown has a stiffening structure or vertebra 23 in the form of two rails 25 and 27 which are of substantially the same length as the blade rubber 3 and are located in longitudinally extending slots 29 therein. The rails are retained in the blade rubber 3 by virtue of the slots 29 in which they are positioned being closed at their ends 31 (Figure 5) and by virtue of the fact that they lie between the claws 19 of the yokes 9 and 11. In order to locate the blade rubber 3 in position within the harness 5, the rails 25 and 27 may be provided, towards one end with protruding parts (not shown) carrying slots, the sides of which lie on opposite longitudinal sides of one of the claws 19 in known manner. Other methods of securing the vertebra in the blade rubber and the blade rubber in the harness exist but this forms no part of the present invention.

Figure 2, as well as being a section on the line II - II of figure 1, shows the cross-section of the previously known rubber and vertebra. It shows that the rails 25 and 27 lying in the slots 29 in the blade rubber 3 had a flat form with a rectangular section whose narrowest side extends at right angles to the windscreen or parallel to the longitudinal central plane of the blade rubber 3. From this, it will appear that, apart from a possible small variation at the claw retention parts (not shown), the flexibility of the blade rubber 3 permitted by the vertebra 23 will be substantially constant throughout its length.

As previously stated, it has been determined that for many applications, particularly in the fields of wind lift at high speeds and variations in the curvature of the windscreen, it is desirable to enable the flexibility of the blade rubber 3 to be variable over its length in order to enable an advantageous pressure distribution to be achieved. In the present case, the flexibility of the vertebra 23 of the blade rubber 3 is varied by a variation in the section of the individual rails 25 and 27 at various points along their length.

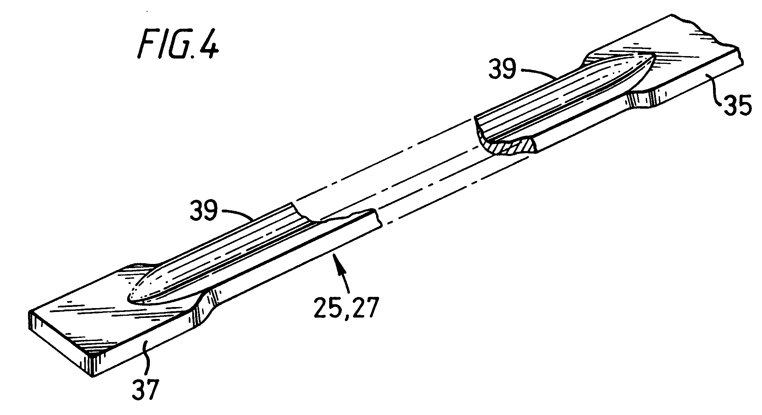

Figure 4 shows a part of a vertebra rail 25 or 27 in perspective view, the two end portions 35 and 37 being of the original flat form and the middle portion 39 having a generally "V" shaped cross-section, whereby a stiffening of the vertebra rail 25 or 27 is achieved in this area. The change in the cross-section can be achieved in any suitable manner, for example by rolling or pressing. Figure 3 shows a section of the blade rubber 3 and vertebra 23 taken on the line III - III of figure 1, at which section, the non-planar cross-section of the vertebra rails 25 and 27 is present. As can be seen, both vertebra rails 25 and 27 have a "V" section which also sits in the slots 29.

The table provided below shows typical section arrangements for a windscreen wiper blade having double end flexibility and single end flexibility:-

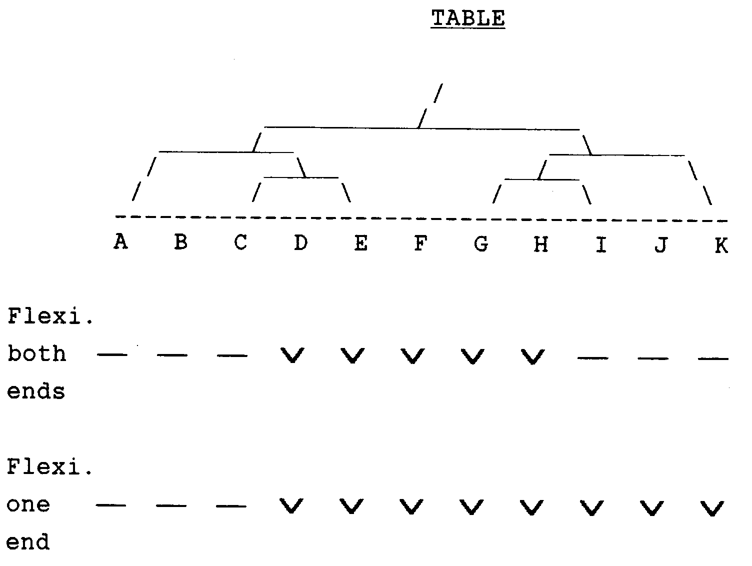

The pressure distribution provided by the usual known vertebra construction on a curved screen is shown in figure 5, while the pressure distribution using a vertebra in accordance with the invention, and as indicated in the above table, is shown in figure 6. In these figures, one half of a windscreen wiper blade is shown, the pressure acting on the windscreen being indicated by the lengths of the shafts of the arrows *p* while the pressure applied to the various parts of the wiper blade harness 5 by the wiper arm 41 is shown by the relative sizes of the arrows *P*. From this it will be seen that, in the known arrangement, the pressure on the windscreen is largest at the points of action of the claws 19 tailing off to a smaller value between the claws 19.

Because of the curvature of the windscreen, the end of the blade rubber shown in figure 5 is not in contact therewith and thus the pressure at this end is reduced to zero. This also causes a slight shift of the pressure peak from beneath the claw 19 of the tertiary yoke 11 towards the end of the blade.

The increased flexibility of the end of the blade in accordance with the present invention and as shown in figure 6 can clearly be seen at the blade end. This flexibility allow the end of the blade to follow the curvature of the windscreen and provides for an evening out of the pressure distribution.

It will be appreciated that various modifications may be made to the above described embodiments without departing from the scope of the invention. For example, while the section of the vertebra rail 25 or 27 shown has the "V" section with the point downwards (towards the windscreen) it could equally well point upwards (away from the windscreen).

While two proposed schemes have been shown for the arrangement of the flexible and non flexible parts of the blade vertebra 23 have been shown, any other suitable scheme could be used. For example, the arrangement could be such that the pressure exerted by the blade rubber 3 on the windscreen could be made more constant over the length of the blade. Fine tuning of such an arrangement could be achieved by varying the depth of the "V" along the length of the vertebra rail 25 or 27, thus producing either a stepped or infinitely variable variation in the flexibility.

The groove produced in the vertebra rail to make the "V" section could be used in relatively short lengths, even to the point of being a circular recess. In this latter case, the recesses could be produced by the use of punch arrangement.

While the embodiments so far described have used a "V" section variation in the cross-section on the vertebra rail, it will be understood that other sections could be used. For example, a non pointed or "U" section could be used or even a so-called "top hat" section would be possible.

From the foregoing, it will be seen that the invention can, in its specifics embodiments, provide a variation of the flexibility and/or pressure distribution of a windscreen wiper blade rubber along its length in an effective and simple manner.

## Claims

1. A vertebra (23) for stiffening the blade rubber (3) of a windscreen wiper comprising a pair of rails (25, 27) located longitudinally in side grooves (29) in the blade rubber (3), characterised in that the section of the rails (25, 27) varies from planar at points (35, 37) of maximum flexibility to a non-planar section at points (39) of a minumum flexibility.

2. A vertebra as claimed in claim 1, characterised in that the cross section of the rails (25, 27) at their non-planar cross section (39) is of "V" shape.

3. A vertebra as claimed in claim 2, characterised in that the narrow point of the "V" points towards the windscreen.

4. A vertebra as claimed in claim 2, characterised in that the narrow point of the "V" points away from the windscreen.

5. A vertebra as claimed in any preceding claim, characterised in that the non-planar cross-section (39) is provided as individual short lengths at specific points along the blade rubber (3).

6. A vertebra as claimed in any one of claims 1 to 4, characterised in that the non-planar cross-section (39) is provided to encompass relatively long lengths of the blade rubber (3).

7. A vertebra as claimed in any preceding claim, characterised in that the variation of the cross section of the vertebra (23) is carried out by pressing or rolling.

8. A vertebra as claimed in any preceding claim, characterised in that the rail (25, 27) has a non planar part (39) extending from one end of the blade rubber (3) to a position beyond the central part thereof, only a region adjacent to the other end being of planar section.

9. A vertebra as claimed in any one of claims 1 to 7, characterised in that the rail (25, 27) has both ends planar with only the central portion non-planar.

## Patentansprüche

1. Stütze (23) zum Versteifen des Blattgummis (3) eines Scheibenwischers mit einem Paar von Schienen (25, 27), die längsgerichtet in Seitennuten (29) im Blattgummi (3) angeordnet sind, **dadurch gekennzeichnet**, daß der Querschnitt der Schienen (25, 27) sich von einer ebenen Erstreckung an Punkten (35, 37) größter Flexibilität zu einem nicht ebenen Querschnitt an Punkten (39) kleinster Flexibilität ändert.

2. Stütze nach Anspruch 1, **dadurch gekennzeichnet**, daß der Querschnitt der Schienen (25, 27) im Bereich des nicht ebenen Querschnitts (39) "V"-förmig ist.

3. Stütze nach Anspruch 2, **dadurch gekennzeichnet**, daß die Spitze des "V" zur Windschutzscheibe zeigt.

4. Stütze nach Anspruch 2, **dadurch gekennzeichnet**, daß die Spitze des "V" von der Windschutzscheibe weg zeigt.

5. Stütze nach einem der vorangehenden Ansprüche, **dadurch gekennzeichnet**, daß der nicht ebene Querschnitt (39) in Form von einzelnen kurzen Längen an speziellen Punkten längs des Blattgummis (3) vorgesehen ist.

6. Stütze nach einem der Ansprüche 1 bis 4, **dadurch gekennzeichnet**, daß der nicht ebene Querschnitt (39) relativ große Längen des Blattgummis (3) umfaßt.

7. Stütze nach einem der vorangehenden Ansprüche, **dadurch gekennzeichnet**, daß die Veränderung des Querschnitts der Stütze (23) durch Eindrücken oder Walzen erreicht ist.

8. Stütze nach einem der vorangehenden Ansprüche, **dadurch gekennzeichnet**, daß die Schiene (25, 27) einen nicht ebenen Teil (39) aufweist, der sich von einem Ende des Blattgummis (3) bis zu einer Stelle jenseits ihres zentralen Teils erstreckt, wobei nur ein Bereich nahe dem anderen Ende einen ebenen Querschnitt aufweist.

9. Stütze nach einem der Ansprüche 1 bis 7, **dadurch gekennzeichnet**, daß die Schiene (25, 27) an beiden Enden eben ist, wobei nur ein zentraler Abschnitt nicht eben ist.

## Revendications

1. Vertèbre (23) pour raidir le caoutchouc de balai (3) d'un essuie-glace de pare-brise, comprenant une paire de rails (25,27) disposés longitudinalement dans des rainures latérales (29) ménagées dans le caoutchouc de balai (3), caractérisée en ce que la section des rails (25, 27) varie d'une section plane, aux points (35, 37) de flexibilité maximum, à une section non-plane aux points (39) de flexibilité minimum.

2. Vertèbre selon la revendication 1, caractérisée en ce que la section transversale des rails (25, 27), à leur section transversale non-plane (39), est en forme de "V".

3. Vertèbre selon la revendication 2, caractérisée en ce que le point étroit du "V" est dirigé vers le pare-brise.

4. Vertèbre selon la revendication 2, caractérisée en ce que le point étroit du "V" est dirigé à l'opposé du pare-brise.

5. Vertèbre selon l'une quelconque des revendications précédentes, caractérisée en ce que la section transversale non-plane (39) est prévue en courts tronçons individuels, en des points spécifiques le long du caoutchouc de balai (3).

6. Vertèbre selon l'une quelconque des revendications 1 à 4, caractérisée en ce que la section transversale non-plane (39) est prévue pour couvrir des tronçons relativement longs du caoutchouc de balai (3).

7. Vertèbre selon l'une quelconque des revendications précédentes, caractérisée en ce que la variation de la section transversale de la vertèbre (23) est mise en oeuvre par pressage ou laminage.

8. Vertèbre selon l'une quelconque des revendications précédentes, caractérisée en ce que le rail (25, 27) présente une partie non-plane (39) s'étendant depuis une extrémité du caoutchouc de balai (3) jusqu'en un point situé au-delà de la partie centrale de ce dernier, seule une région contiguë à l'autre extrémité étant de section plane.

9. Vertèbre selon l'une quelconque des revendications 1 à 7, caractérisée en ce que le rail (25, 27) a les deux extrémités planes avec seulement la partie centrale non-plane.
